# EUROPEAN PATENT SPECIFICATION

(11) **EP 3 467 865 B1**
(45) Date of publication and mention of the grant of the patent: **15.11.2023**
(21) Application number: 17382655.3
(22) Date of filing: 03.10.2017
(51) Int. Cl.: H01H 85/02, H01H 85/30, H02B 1/18

(54) **CABLE DUCT, FUSE BLOCK AND MONITORING SYSTEM**
KABELKANAL, SICHERUNGSSOCKEL UND ÜBERWACHUNGSSYSTEM
CONDUIT DE CÂBLE, BLOC FUSIBLE ET SYSTÈME DE SURVEILLANCE

(43) Date of publication of application: 10.04.2019
(73) Proprietor: Gorlan Team, S.L.U., 48340 Amorebieta Vizcaya (ES)
(72) Inventor: GÓMEZ BARBERO, José, Julio, 48340 AMOREBIETA (Bizkaia) (ES)
(74) Representative: Herrero & Asociados, S.L.

(56) References cited:
- WO-A1-2013/069756
- DE-U1- 29 705 224
- US-A- 4 616 207

## Description

### Object of the Invention

The present invention relates to the field of electric power distribution, and more particularly to fuse blocks with electric power monitoring accessories.

### Background of the Invention

Distribution lines in low-voltage grids usually have protections based on electric switches with fuses. Said fuses are housed in fuse blocks which are grouped in distribution channels, the fuse blocks acting as output lines of said boards. In the case of vertically arranged three-pole fuse blocks, said blocks are anchored to three conducting bars, which are usually arranged horizontally, constituting a distribution busbar of the low-voltage board.

By means of optimizing operation of the power distribution grid and controlling the power consumption of users, it is possible to save in energy and in costs, in addition to achieving an environmental benefit. To enable implementing said optimization, fuse blocks can comprise auxiliary monitoring elements, such as current and/or voltage sensors, for example. The auxiliary elements can be integrated in the fuse block itself or in additional modules which are coupled thereto, forming a combined structure which shall be referred to herein as a "smart block" to make it easier to understand the present invention.

Electrical parameters to be monitored can be measured directly or through sensors. For example, DE 10,002,800 B4 describes current sensors which are incorporated in the rear region of the fuse blocks, whereas DE 202,010,017,635 U1 and EP 2,546,856 A1 describe sensors associated with the region containing the terminals and the contacts, respectively.

Nevertheless, the mentioned monitoring elements require complex wiring for transmitting the measured information to the processing and control elements. This wiring constitutes the so-called auxiliary circuits. For example, EP 2,053,627 B1 and DE 2,970,5224 U1 propose improvements to the internal wiring of blocks associated with sensors, distributing it in casings finished with a single connector for multiple cables housed in the high or low part of the fuse block. In turn, EP2,779,200 A1 simplifies wiring by incorporating an analog-to-digital converter in the block itself. The processing element is thereby incorporated within the assembly of the smart block, and the analog signals of multiple cables of one and the same block are thereby brought together in a single digital link, allowing a simpler, more compact cable layout, therefore making the cables safer. Nonetheless, the monitoring cables are never altogether eliminated since the processing means must make its generated information reach control means where the monitoring information is managed.

However, none of the described systems approaches the issue of taking the monitoring cables of the auxiliary circuits from the fuse blocks to external elements (for example, control, processing or communication means). For example, in the case of a three-pole fuse block with three current transformers, it would be necessary to carry six monitoring cables (two for each secondary of each current transformer) from the current sensors to the measuring and control devices. If that block furthermore has one voltage sensor for each phase, three additional cables would be required, reaching a total of nine monitoring cables per fuse block required for safe ducting.

Even with the improvements described above, the large number of fuse blocks of one and the same distribution board involves the existence of a large number of monitoring cables with a layout that can result in safety or operational issues with the fuse blocks. These monitoring cables are conventionally organized into passages distributed over the distribution board, usually adhered to the chasses and/or frames of said distribution channels. Nevertheless, the distribution channels often do not have an outer case, but rather the equipment is distributed in a so-called "open-frame" arrangement, so there is no possibility of safely establishing these passages.

Furthermore, there is an additional issue in the case of current and/or voltage sensors located in the region close to the output terminals of the fuse block. In other words, the small conductors of the auxiliary monitoring circuit have to coexist in the same space with the low-voltage distribution cables, which are larger in size and are connected to the output connections of the block, bringing about an unsafe situation due to a possible insulation failure or short circuit. Furthermore, in these cases, the type of user accessing the distribution cables and monitoring cables has a different skill and must follow different safety protocols.

PCT application WO 2013/069756 A1 describes a wiring module to be attached to a cell group in which a plurality of unit cells having electrode terminals of a positive electrode and a negative electrode are arranged.

US patent application US 4616207 A relates to a fuse holder having a Hall-effect current sensor which provides a signal responsive to the magnetic field present when current is passing along the current path of the fuse holder.

Therefore, there is a need in the state of the art for a technique for distributing monitoring cables associated with fuse blocks which allows ducting a large number of cables complying with the safety standards required for the electric power distribution boards.

### Description of the Invention

The present invention solves the issues described above by means of a distribution of monitoring cables based on elements integrated in and/or associated with the smart blocks themselves, facilitating an ordered layout of monitoring cables from said blocks to external processing and/or control elements.

A first aspect of the invention relates to a duct for monitoring cables of fuse blocks according to claim 1.

The ducting means comprise at least one channel for directing and guiding monitoring cables, preferably in a direction parallel to the busbar of the low-voltage board. The monitoring cables carry information relating to the monitored electrical parameters from auxiliary monitoring elements (such as sensors, for example), to processing means, or in cases where said processing means are integrated in the smart block, to control means.

Where the processing means are incorporated in the block, the monitoring cables carry the information in the form of a "digitized" signal to the control elements. In this case, the monitoring cables act like communication cables.

Fuse blocks, and particularly fuse blocks with a design that has larger vertical dimensions than horizontal dimensions, are usually arranged in the distribution channels in groups, one next to the other, with hardly any space between them. As a result, the duct of the invention is morphologically adapted to form, together with other similar ducts in adjacent blocks, a modular system of channels which, when placed one next to the other, generate a continuous duct for the monitoring cables. In other words, an end of a channel of a first duct coincides with a beginning of a channel of a second duct, when said first and second ducts are located in contiguous fuse blocks. According to respective preferred options, the duct can be implemented in the upper part of the fuse blocks and/or in the lower part of said fuse blocks.

Depending on the preferred option that is implemented, the duct can be an independent modular device that can be installed in smart blocks, or it can come already integrated in said smart blocks or any of the elements thereof. In the event that they are integrated in the smart blocks, the duct can be incorporated, for example, in the casing of the fuse block, of the auxiliary elements, or of the processing means. In the event of being independent devices, they can be associated with the smart block by means of any mechanical technique known in the state of the art, such as by means of a technique selected from clamping, friction and fitting, for example.

The ducting means preferably comprise at least two openings in planes mainly perpendicular to the guiding direction for guiding the monitoring cables, allowing the orderly entry and incorporation of said monitoring cables into the duct at respective ends thereof. More preferably, the at least two openings are initially closed by means of walls, the boundaries of said walls being attached to the main body of the duct by means of notches. The notches weaken said boundaries, allowing the controlled breaking thereof during the installation of the duct and/or wiring. This closing will provide the required protection in the event that block is the first or last block of the group in the distribution board, in which case the side of the block may be accessible and becomes a region that must be provided with protection.

The ducting means also preferably comprise additional means for ordering cables, such as intermediate walls, compartments, flanges and/or clamps, for example. In addition to guiding cables, said additional means can carry out electrical insulation functions in cases where cables of different phases run close to one other. This allows preventing short circuits and other risk situations.

The ducting means act like a covering for the cables. This is important for giving the block the means so that it can offer electrical insulation between the user and the monitoring cables. These small cables do not usually have a very high level of insulation, which is what is requested of low-voltage installations, and the covering performs this function. To that end the duct comprises a protective structure preventing access to the monitoring cables, said protective structure having at least two faces parallel to the guiding direction and forming an angle with one another. In a first example, the section that is transverse to the duct direction is L-shaped, i.e., the protective structure comprises two faces forming an angle of about 90°. In a second example, the section that is transverse to the duct direction is U-shaped, i.e., the protective structure comprises three faces forming two angles of about 90° between such faces. So at least one of the U-shaped or L-shaped sections acts like an insulating cover, preventing access to the ducted cables. It must be observed that other angles and morphologies of the protective structure can be implemented provided that one of the faces or elements of the protective structure acts like a covering for the monitoring cables.

The ducting means may also preferably include a cover protecting the ducted cables, preventing accidental contact by the user. It must be observed that different types of users with different skills and safety protocols may access said one and the same distribution board, so limiting access to the monitoring cables for some of these users is particularly relevant. The cover preferably remains attached to the main body in both its open and closed positions, thereby preventing possible losses. The cover is also preferably hinged, such that once it is open, it remains attached to the main body by means of hinges. The cover also preferably comprises anchoring means keeping it open while the user accesses the cables. The cover also preferably includes a self-closing function by means of an elastic element which returns the cover to its closed position from the open position once said access has ended. To assure the safety of the power distribution system and of the operators, the cover preferably blocks access to the electric power distribution cables when it is in its open position. In other words, the hinges of the cover are located between the access to the monitoring cables and access to the distribution cables, such that both accesses cannot be opened simultaneously.

The ducting means also preferably comprise additional attachment means adapted for being attached to adjacent ducts, facilitating the continuous guiding of cables between ducts and making any movements of such ducts integral with one another, such as opening the covers, for example.

A second aspect of the invention relates to a smart fuse block of an electric power distribution board integrating ducting means according to any of the preferred implementations and/or options of the first aspect of the present invention. In other words, each fuse block comprises modular ducting means associated with said block guiding the monitoring cables between adjacent fuse blocks according to any of the configurations described above. Additionally, the smart block comprises auxiliary monitoring elements, such as voltage and/or current sensors, in charge of monitoring the operating parameters that will be transmitted through the monitoring cables.

Finally, a third aspect of the invention relates to a monitoring system for monitoring smart fuse blocks of an electric power distribution board, said monitoring system comprising a plurality of monitoring cables ducted through a plurality of modular ducting means according to any of the preferred implementations and/or options of the first aspect of the present invention. The monitoring cables transmit operating parameters measured by a plurality of auxiliary elements (such as voltage and/or current sensors, for example), located in the smart blocks.

The monitoring system also comprises external control means supervising the distribution board and processing means processing the information extracted by the auxiliary elements. Said processing means can be distributed in different smart blocks or externally joined to one another. In the event of being distributed, the processing means can be connected to the control means both in series and in parallel. The monitoring system can also comprise any data receiving system, an analysis system for analyzing said data, communication interfaces, user interfaces, etc., that are known in the state of the art.

The cable ducting means, fuse block and supervising system for supervising fuse blocks therefore provide an efficient and safe solution to the layout of monitoring cables in electric power distribution boards. They also allow minimizing the volume taken up by said cables, thereby neither hindering nor endangering the operation of associated fuse blocks. Furthermore, they allow maintaining the insulation requirements set forth for different types of wiring, and they are compatible with any number of monitoring cables per fuse block. These and other advantages of the invention will become apparent in light of the detailed description thereof.

### Description of the Drawings

For the purpose of aiding to better understand the features of the invention according to a preferred practical embodiment thereof and to complement this description, the following drawings are attached as an integral part thereof with an illustrative and non-limiting character:
Figure 1 schematically shows a distribution board formed by a plurality of smart fuse blocks, in which unique external processing means are connected to all the blocks according to a first configuration of the invention.
Figure 2 has a formed distribution board in which each fuse block has processing means connected in parallel to external control means according to a second preferred configuration of the invention.
Figure 3 illustrates a formed distribution board in which each fuse block has processing means connected in series to external control means, according to a second preferred configuration of the invention.
Figure 4 schematically shows an assembly of ducts located in the lower part of an assembly of fuse blocks, according to a first preferred embodiment of the invention.
Figure 5 shows a side view of ducts with a cover according to a second preferred embodiment of the invention, as well as an example of the fuse block to which it is fixed.
Figure 6 illustrates a third preferred embodiment of the invention in which the ducts include a cover, located at the upper end of the fuse block.
Figure 7 exemplifies ducts also located at the upper end of the fuse block according to a fourth preferred embodiment thereof.
Figure 8 shows ducts for fuse blocks with transformers in the rear part according to a fifth preferred embodiment of the invention.
Figure 9 shows the ducts and their transverse openings in greater detail according to a sixth preferred embodiment thereof.
Figure 10 shows a first closed position of a duct in which access to the distribution cables is blocked according to a seventh preferred embodiment of the invention.
Figure 11 shows a second open position of the same duct of the seventh embodiment, the cover of which blocks access to the electric power distribution cables when it is open.
Figure 12 shows an enlarged detail of the hinged cover in the closed position.

### Preferred Embodiment of the Invention

In this text, the term "comprises" and derivatives thereof (such as "comprising", etc.) must not be interpreted in an excluding manner, i.e., these terms must not be interpreted as being exclusive of the possibility that what is described and defined may include more elements, steps, etc. It must also be observed that even though the preferred embodiments of the invention are described for independent duct devices, the same features or any combination thereof can be integrated in the fuse blocks themselves or in the monitoring system according to the second and third aspects of the present invention as claimed.

In the context of the present invention, the terms "about" and derivatives thereof must be understood as being indicative of values close to those accompanying the term. In other words, a deviation within reasonable limits with respect to the exact value is contemplated, since the person skilled in the art will understand that said variations may occur due to manufacturing or measurement limitations, or due to design decisions that do not affect the functionality of the elements. The same reasoning applies to the term "mainly" and derivatives thereof.

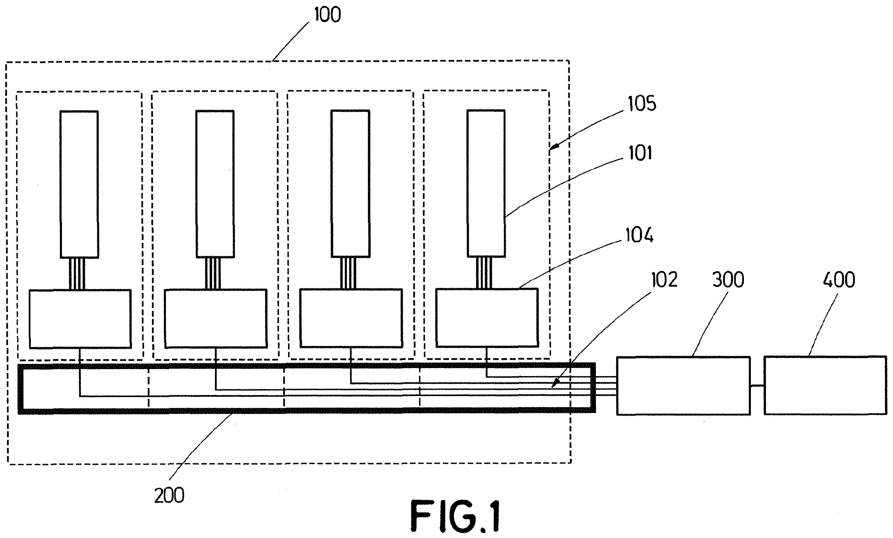

Figure 1 shows a first configuration of the smart blocks (105) of the invention, as well as a first configuration of the monitoring system controlling the operation thereof, which monitoring cables (102) are guided through a first embodiment of the ducts (200) of the invention. It again must be observed that smart block (105) is used to refer to the combined structure comprising a fuse block (101) and its auxiliary monitoring elements (104). The plurality of smart blocks (105) in turn forms a distribution board (100). In this case, the processing means (300) are located outside of said distribution board (100), such that the monitoring cables connect the auxiliary monitoring elements (104) of each smart block (105) with the processing means (300) in parallel. In turn, the processing means (300) are connected with control means (400) that control the entire distribution board (100). It must be observed that the connection between the processing means (300) and the control means (400) can be done by means of any local or remote, wired or wireless communication protocol or technology known in the state of the art.

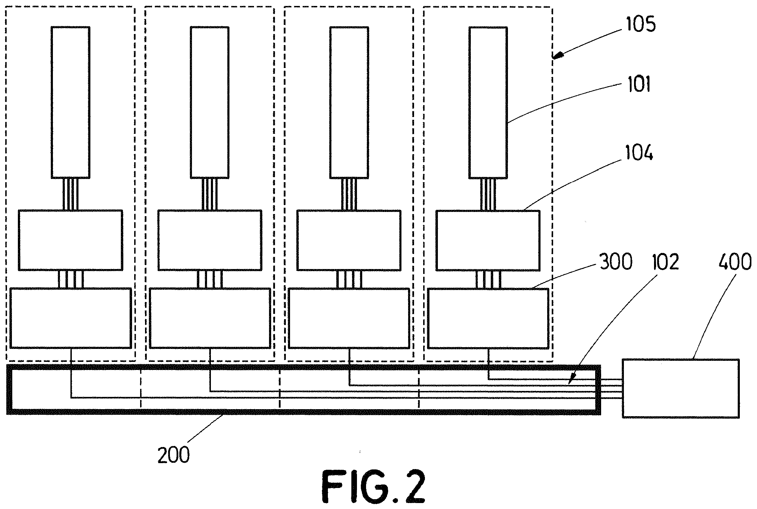

Figure 2 shows an alternative configuration in which the processing means (300) are distributed in the smart blocks (105). In other words, each smart block (105) comprises processing means (300) processing the signals provided by the auxiliary monitoring elements (104), the already processed parameters therefore being sent through the monitoring cables (102). In this case, the connection between processing means (300) and control means (400) is in parallel.

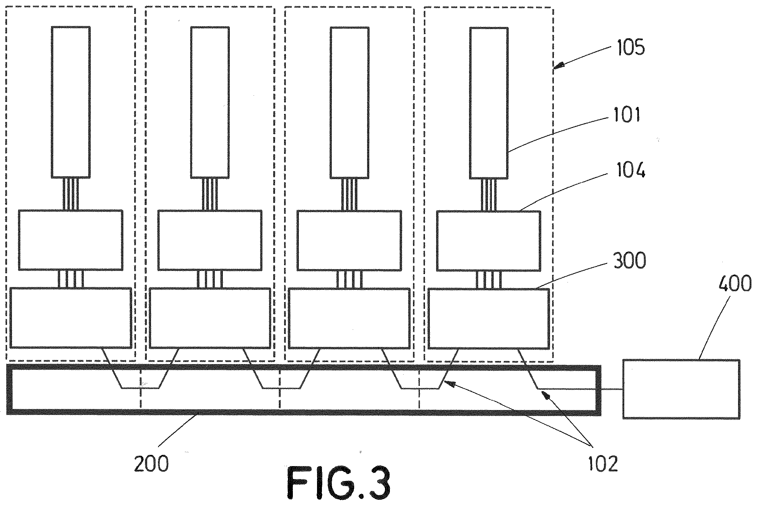

Figure 3 shows a third configuration also with distributed processing means (300), but in this case the connection with the control means (400) is in series. In other words, the processing means (300) of each smart block (105) are connected with the processing means (300) of the next smart block (105), such that only the last smart block (105) is connected directly with the control means (400).

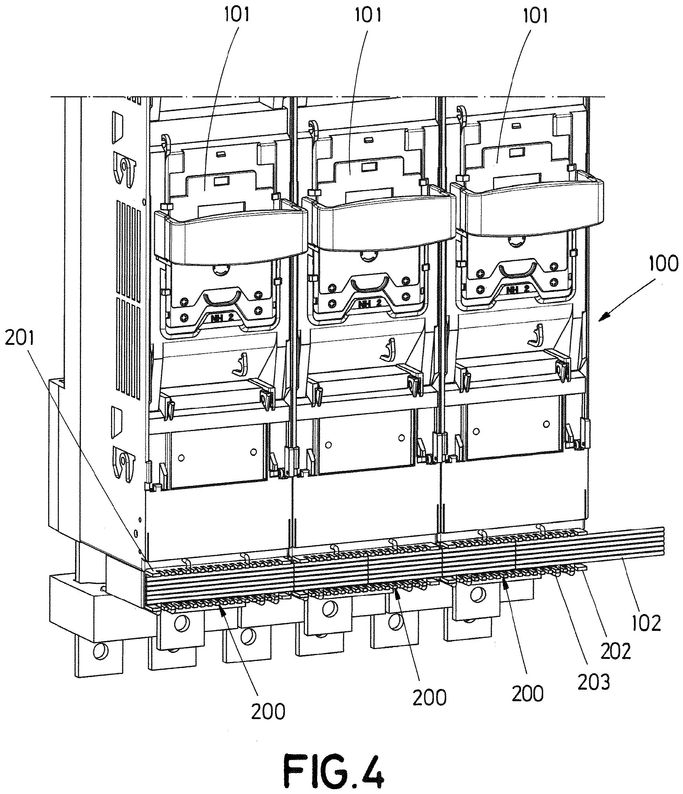

Figure 4 shows a plurality of ducts (200) connected to the fuse blocks (101) of an electric power distribution board (100). Each duct (200) is connected in modular fashion to each fuse block (101) through fixing means (201) which can operate by means of clamping, friction or fitting. In this particular embodiment, the duct devices (200) are fixed to the lower part of the fuse blocks (101), horizontally guiding the monitoring cables (102) by means of channels (202). Said channels (202) can be, for example, a passage having a rectangular section with or without a cover. Given that the ducts (200) of adjacent fuse blocks (101) are placed at the same height, their respective channels (202) form a continuous path facilitating the path of the wiring and preventing it from coming into contact with other elements of the fuse blocks (101). Along their path, the ducts (200) have transverse openings (203) that allow introducing or removing cables, as needed.

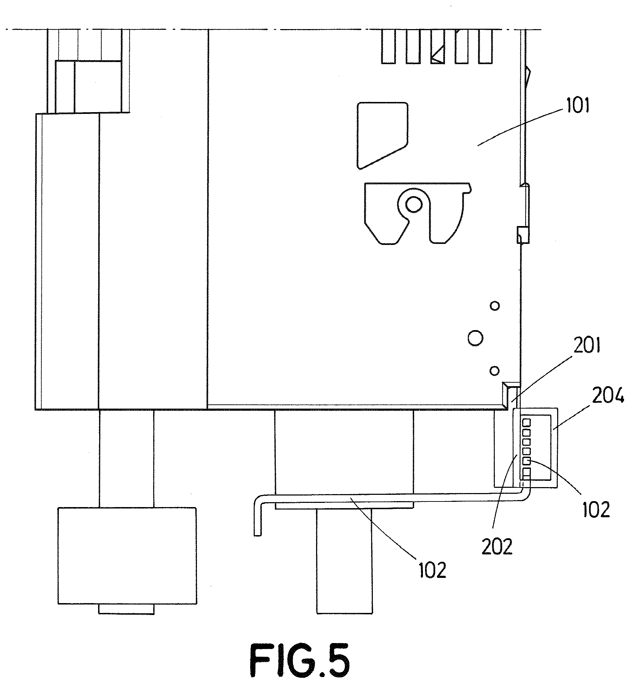

Figure 5 shows a side view of a duct (200), also installed in the lower part of a fuse block (101), in this case incorporating an insulating cover (204) for protecting the cables. It must be observed that flanges, clamps, walls, compartments, or any additional means for ordering the monitoring cables (102) can be included inside the ducts (200).

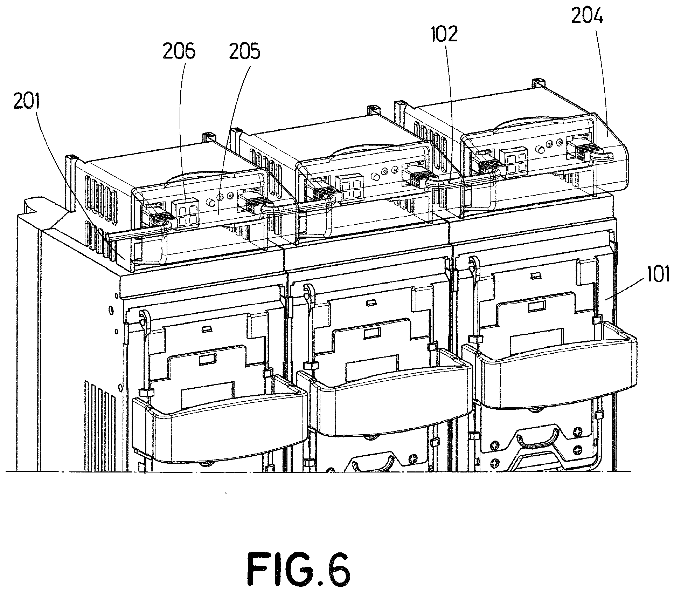

Figure 6 exemplifies the case of a duct (200) installed in the upper part of the fuse block (101), in this case with a protective cover (204). Each duct device (200) additionally comprises integrated analysis means (205), with their respective viewing means (206), such as light emitting diodes (LEDs), liquid crystal displays (LCDs), or any other element known in the state of the art that allows providing information about parameters relating to the operation of the fuse block (101).

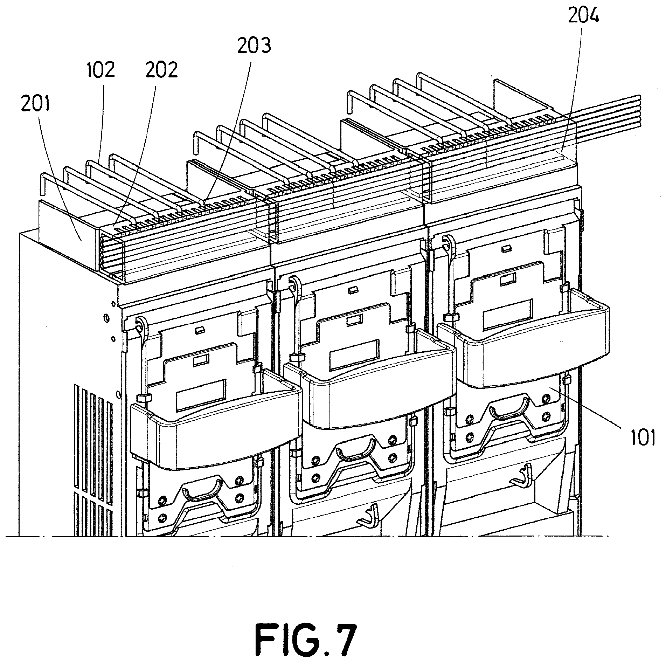

The duct (200) shown in Figure 7 also comprises fixing means (201) adapted for the installation thereof in the upper part of the fuse block (101), in this case without incorporating any additional measurement, analysis or viewing element, and therefore solely being limited to the organization of the monitoring cables (102).

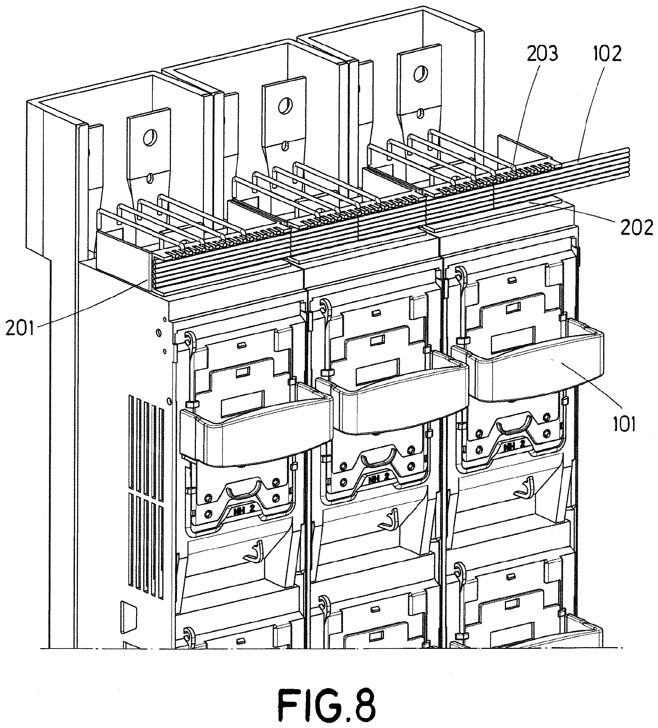

As seen in Figure 8, the case of the ducts (200) installed in the upper part of the fuse blocks (101) is particularly useful for the case in which current transformers are installed in the rear part of said fuse blocks (101).

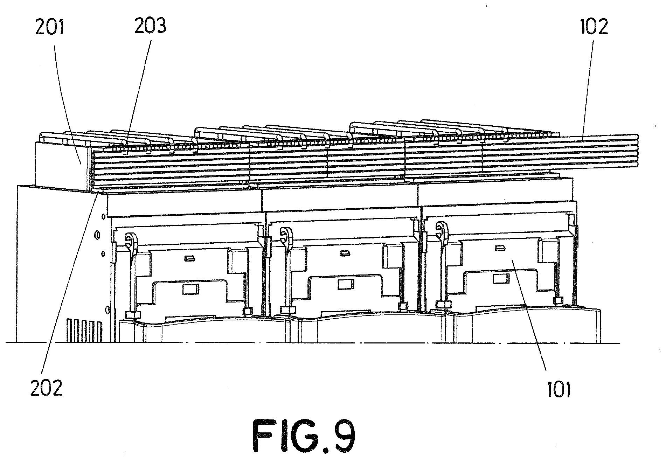

Figure 9 shows an enlarged view of a duct (200) installed in the upper part of the fuse blocks (101), where the transverse openings (203) that allow the cables to enter and exit the channel (202) can be seen more clearly.

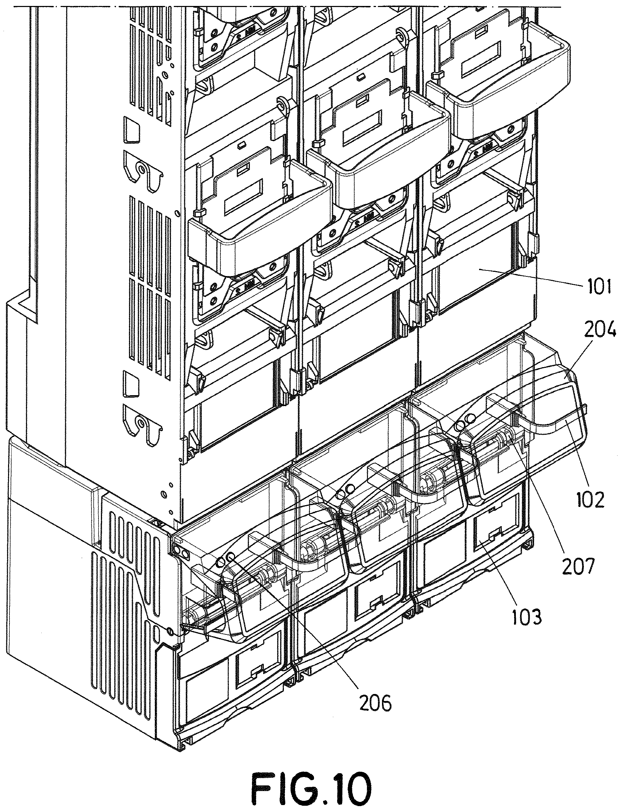

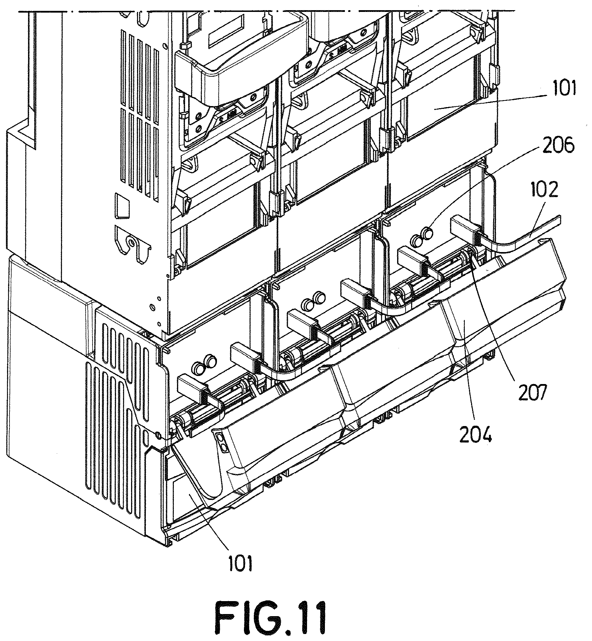

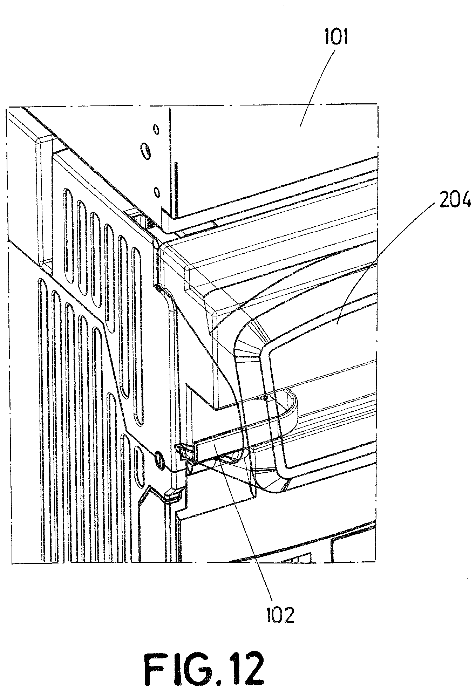

Finally, Figures 10 and 11 show two positions of one and the same duct (200) the cover (204) of which is configured to hinder simultaneous access to the monitoring cables (102) and to the electric power distribution cables (103). The hinged cover (204) is connected to the main body of the duct (200) by means of hinges (207) located between access to the monitoring cables (102) and access to the electric power distribution cables (103). Likewise, when the cover (204) is closed, the operator can access the electric power distribution cables (103), whereas when the cover (204) is open, said access is blocked. The cover (204) can additionally incorporate elastic elements (such as springs, for example) for returning it to its closed position, as shown in Figure 12, after the opening thereof, as well as stops for holding the open position during the operation.

In view of this description and drawings, the person skilled in the art will understand that the invention has been described according to several preferred embodiments thereof, but that many variations can be introduced in said preferred embodiments without departing from the object of the invention as claimed.

## Claims

1. Duct (200) for monitoring cables (102), said monitoring cables (102) being adapted for transmitting parameters monitored by a plurality of auxiliary monitoring elements (104) connected to at least one fuse block (101) of an electric power distribution board (100), wherein the duct (200) comprises at least one channel (202) for directing and guiding monitoring cables (102), said channel (202) being adapted for housing the monitoring cables (102), such that the duct (200) is morphologically adapted to form, together with other similar ducts (200) in adjacent fuse blocks (101), a modular system of channels which, when placed one next to the other, generate a continuous duct for the monitoring cables (102); the duct (200) acts like a covering for the monitoring cables (102), the duct (200) comprising a protective structure preventing access to the monitoring cables (102), **characterized in that**
said protective structure comprising at least two faces parallel to the guiding direction, and forming an angle between said faces.

2. Duct (200) according to claim 1, **characterized in that** the duct (200) is integrated in the fuse block (101).

3. Duct (200) according to claim 1, **characterized in that** the duct (200) is an independent module that can be installed in the fuse block (101) using fixing means (201).

4. Duct (200) according to any of the preceding claims, **characterized in that** it comprises at least one fixing point for cable organizing means selected from flanges and clamps.

5. Duct (200) according to any of the preceding claims, **characterized in that** it comprises at least two openings (203) in planes mainly perpendicular to the guiding direction for guiding the monitoring cables (102), said at least two openings (203) being adapted to allow the entry and exit of said monitoring cables (102) into the duct (200) at respective ends thereof.

6. Duct (200) according to claim 5, **characterized in that** the at least two openings (203) are initially closed by walls and provided with empty regions attached by notches that weaken certain boundaries of said walls, allowing the controlled breaking thereof.

7. Duct (200) according to any of the preceding claims, **characterized in that** it comprises a cover (204) protecting access to the monitoring cables (102).

8. Duct (200) according to claim 7, **characterized in that** in the open position, the cover (204) blocks the access to connecting points of the combined structure (105) comprising the fuse block (101) and auxiliary elements (104).

9. Duct (200) according to any of claims 7 to 8, **characterized in that** in the open position, the cover (204) blocks the access to electric power distribution cables (103).

10. Duct (200) according to claim 7, **characterized in that** the cover (204) is configured to remain attached to the main body of the duct (200) in both its open and closed positions, thereby preventing possible losses.

11. Duct (200) according to claim 7, **characterized in that** the cover (204) is hinged, such that once it is open, it remains attached to the main body of the duct (200) by means of hinges (207) located between access to the monitoring cables (102) and access to the electric power distribution cables (103).

12. Duct (200) according to claim 1. **characterized in that** the duct (200) additionally comprises integrated analysis means (205), with their respective viewing means (206), such as light emitting diodes (LEDs), liquid crystal displays (LCDs), or any other element adapted to provide information about parameters relating to the operation of the fuse block (101).

13. Duct (200) according to any of the preceding claims, **characterized in that** it comprises attachment means adapted for being attached to the attachment means of the adjacent ducts (200), making their movement integral.

14. Fuse block (101) of an electric power distribution board (100), **characterized in that** it comprises:
- auxiliary monitoring elements (104) monitoring operating parameters;
- at least one monitoring cable (102) transmitting the monitored parameters;
- a duct (200) according to any of claims 1 to 13, ducting the at least one monitoring cable (102).

15. Monitoring system for monitoring an electric power distribution board (100) comprising a plurality of fuse blocks (101), **characterized in that** it further comprises:
- auxiliary monitoring elements (104) monitoring operating parameters;
- processing means (300) processing the monitored parameters;
- a plurality of monitoring cables (102) transmitting the monitored parameters;
- external control means (400) supervising the distribution board (100); and
- a plurality of ducts (200) according to any of claims 1 to 13, ducting the plurality of monitoring cables (102).

16. Monitoring system according to claim 15, **characterized in that** the processing means (300) are distributed between the plurality of fuse blocks (101), being integrated next to the auxiliary monitoring elements (104), and the monitoring cables (102) connecting said distributed processing means (300) with the control means (400).

## Patentansprüche

1. Kanal (200) für Überwachungskabel (102), wobei die Überwachungskabel (102) zum Übertragen von Parametern geeignet sind, die durch mehrere zusätzliche Überwachungselemente (104) überwacht werden, welche mit zumindest einem Sicherungssockel (101) einer Stromverteilungsplatine (100) verbunden sind, und wobei der Kanal (200) zumindest einen Durchgang (202) zum Leiten und Führen von Überwachungskabeln (102) umfasst, und wobei der Durchgang (202) zum Einfassen der Überwachungskabel (102) geeignet ist, sodass der Kanal (200) morphologisch zum Ausbilden, zusammen mit anderen gleichartigen Kanälen (200) in benachbarten Sicherungsblöcken (101), eines modularen Systems von Durchgängen geeignet ist, welche, wenn sie einer neben dem anderen angeordnet sind, einen fortlaufenden Kanal für die Überwachungskabel (102) erzeugen, und wobei der Kanal (200) wie eine Abdeckung für die Überwachungskabel (102) wirkt, und wobei der Kanal (200) eine Schutzstruktur umfasst, die Zugang zu den Überwachungskabeln (102) verhindert,
**dadurch gekennzeichnet,**
**dass** die Schutzstruktur zumindest zwei Seitenflächen umfasst, die parallel zur Führungsrichtung verlaufen und einen Winkel zwischen den Seitenflächen ausbilden.

2. Kanal (200) nach Anspruch 1, **dadurch gekennzeichnet, dass** der Kanal (200) in den Sicherungsblock (101) eingegliedert ist.

3. Kanal (200) nach Anspruch 1, **dadurch gekennzeichnet, dass** der Kanal (200) ein unabhängiges Modul ist, das unter Benutzung von Befestigungsmitteln (201) im Sicherungsblock (101) eingerichtet sein kann.

4. Kanal (200) nach einem der vorhergehenden Ansprüche, **dadurch gekennzeichnet, dass** er zumindest einen Befestigungspunkt für Kabelorganisierungsmittel umfasst, die aus Flanschen und Klemmen ausgewählt sind.

5. Kanal (200) nach einem der vorhergehenden Ansprüche, **dadurch gekennzeichnet, dass** er zumindest zwei Öffnungen (203) in Ebenen umfasst, die hauptsächlich senkrecht zur Führungsrichtung zum Führen der Überwachungskabel (102) verlaufen, wobei die zumindest zwei Öffnungen (203) zum Ermöglichen des Eintritts und Austritts der Überwachungskabel (102) in den Kanal (200) an jeweiligen Enden davon geeignet sind.

6. Kanal (200) nach Anspruch 5, **dadurch gekennzeichnet, dass** die zumindest zwei Öffnungen (203) anfänglich durch Wände geschlossen und mit leeren Bereichen versehen sind, die durch Kerben angebracht sind, welche bestimmte Grenzen der Wände schwächen, wodurch das gesteuerte Zerbrechen derselben ermöglicht ist.

7. Kanal (200) nach einem der vorhergehenden Ansprüche, **dadurch gekennzeichnet, dass** er eine Abdeckung (204) umfasst, die einen Zugang zu den Überwachungskabeln (102) schützt.

8. Kanal (200) nach Anspruch 7, **dadurch gekennzeichnet, dass** die Abdeckung (204) in der offenen Position den Zugang zu Verbindungspunkten der kombinierten Struktur (105), die den Sicherungssockel (101) und zusätzliche Elemente (104) umfasst, blockiert.

9. Kanal (200) nach Anspruch 7 oder 8, **dadurch gekennzeichnet, dass** die Abdeckung (204) in der offenen Position den Zugang zu Stromverteilungskabeln (103) blockiert.

10. Kanal (200) nach Anspruch 7, **dadurch gekennzeichnet, dass** die Abdeckung (204) dazu konfiguriert ist, sowohl in ihrer offenen als auch geschlossenen Position am Hauptkörper des Kanals (200) angebracht zu verbleiben, wodurch mögliche Verluste verhindert sind.

11. Kanal (200) nach Anspruch 7, **dadurch gekennzeichnet, dass** die Abdeckung (204) angelenkt ist, sodass sie, sobald sie offen ist, an dem Hauptkörper des Kanals (200) mittels Scharnieren (207) angebracht verbleibt, die sich zwischen Zugang zu den Überwachungskabeln (102) und Zugang zu den Stromverteilungskabeln (103) befinden.

12. Kanal (200) nach Anspruch 1, **dadurch gekennzeichnet, dass** der Kanal (200) zusätzlich integrierte Analysemittel (205) umfasst, mit ihren jeweiligen Anzeigemitteln (206), wie etwa Leuchtdioden (LEDs), Flüssigkristallanzeigen (LCDs) oder jeglichem anderen Element, das zum Vorsehen von Information über Parameter geeignet ist, welche mit dem Betrieb des Sicherungssockels (101) zusammenhängen.

13. Kanal (200) nach einem der vorhergehenden Ansprüche, **dadurch gekennzeichnet, dass** er Anbringungsmittel umfasst, die dazu geeignet sind, an den Anbringungsmitteln der benachbarten Kanäle (200) angebracht zu sein, wodurch ihre Bewegung einstückig hergestellt ist.

14. Sicherungssockel (101) einer Stromverteilungsplatine (100), **dadurch gekennzeichnet, dass** er umfasst;
- zusätzliche Überwachungselemente (104), die Betriebsparameter überwachen;
- zumindest ein Überwachungskabel (102), das die überwachten Parameter überträgt;
- einen Kanal (200) nach einem der Ansprüche 1 bis 13, der das zumindest eine Überwachungskabel (102) kanalisiert.

15. Überwachungssystem zum Überwachen einer Stromverteilungsplatine (100), das mehrere Sicherungssockel (101) umfasst, **dadurch gekennzeichnet, dass** es ferner umfasst:
- zusätzliche Überwachungselemente (104), die Betriebsparameter überwachen;
- Verarbeitungsmittel (300), die die überwachten Parameter verarbeiten;
- mehrere Überwachungskabel (102), die die überwachten Parameter übertragen;
- externe Steuermittel (400), die die Verteilungsplatine (100) überwachen; und
- mehrere Kanäle (200) nach einem der Ansprüche 1 bis 13, die die mehreren Überwachungskabel (102) kanalisieren.

16. Überwachungssystem nach Anspruch 15, **dadurch gekennzeichnet, dass** die Verarbeitungsmittel (300) zwischen den mehreren Sicherungssockeln (101), eingegliedert neben den zusätzlichen Überwachungselementen (104), und den Überwachungskabeln (102) verteilt sind, die die verteilten Verarbeitungsmittel (300) mit den Steuermitteln (400) verbinden.

## Revendications

1. Conduit (200) pour câbles de surveillance (102), lesdits câbles de surveillance (102) étant adaptés pour transmettre des paramètres surveillés par une pluralité d'éléments de surveillance auxiliaires (104) raccordés à au moins un bloc fusible (101) d'un tableau de distribution d'électricité (100), dans lequel le conduit (200) comprend au moins un canal (202) pour diriger et guider les câbles de surveillance (102), ledit canal (202) étant adapté pour loger les câbles de surveillance (102), de sorte que le conduit (200) est adapté, morphologiquement, pour former, conjointement avec d'autres conduits (200) similaires dans des blocs fusibles (101) adjacents, un système modulaire de canaux qui, lorsqu'ils sont placés les uns à côté des autres, génèrent un conduit continu pour les câbles de surveillance (102) ;
le conduit (200) agit comme un recouvrement pour les câbles de surveillance (102), le conduit (200) comprenant une structure de protection empêchant l'accès aux câbles de surveillance (102), **caractérisé en ce que** ladite structure de protection comprend au moins deux faces parallèles à la direction de guidage, et forme un angle entre lesdites faces.

2. Conduit (200) selon la revendication 1, **caractérisé en ce que** le conduit (200) est intégré dans le bloc fusible (101).

3. Conduit (200) selon la revendication 1, **caractérisé en ce que** le conduit (200) est un module indépendant qui peut être installé dans le bloc fusible (101) à l'aide de moyens de fixation (201).

4. Conduit (200) selon l'une quelconque des revendications précédentes, **caractérisé en ce qu'**il comprend au moins un point de fixation pour des moyens d'organisation de câbles sélectionnés parmi des brides et des pinces.

5. Conduit (200) selon l'une quelconque des revendications précédentes, **caractérisé en ce qu'**il comprend au moins deux ouvertures (203) dans des plans principalement perpendiculaires à la direction de guidage pour guider les câbles de surveillance (102), lesdites au moins deux ouvertures (203) étant adaptées pour permettre l'entrée et la sortie desdits câbles de surveillance (102) dans le conduit (200) au niveau de leurs extrémités respectives.

6. Conduit (200) selon la revendication 5, **caractérisé en ce que** les au moins deux ouvertures (203) sont initialement fermées par des parois et prévues avec des régions vides fixées par des encoches qui affaiblissent certaines limites desdites parois, permettant leur rupture contrôlée.

7. Conduit (200) selon l'une quelconque des revendications précédentes, **caractérisé en ce qu'**il comprend un couvercle (204) protégeant l'accès aux câbles de surveillance (102).

8. Conduit (200) selon la revendication 7, **caractérisé en ce que**, dans la position ouverte, le couvercle (204) empêche l'accès aux points de raccordement de la structure (105) combinée comprenant le bloc fusible (101) et les éléments auxiliaires (104).

9. Conduit (200) selon l'une quelconque des revendications 7 et 8, **caractérisé en ce que**, dans la position ouverte, le couvercle (204) empêche l'accès aux câbles de distribution d'électricité (103).

10. Conduit (200) selon la revendication 7, **caractérisé en ce que** le couvercle (204) est configuré pour rester fixé au corps principal du conduit (200) à la fois dans ses positions ouverte et fermée, empêchant ainsi des pertes possibles.

11. Conduit (200) selon la revendication 7, **caractérisé en ce que** le couvercle (204) est articulé par charnière, de sorte qu'une fois qu'il est ouvert, il reste fixé au corps principal du conduit (200) au moyen de charnières (207) positionnées entre l'accès aux câbles de surveillance (102) et l'accès aux câbles de distribution d'électricité (103).

12. Conduit (200) selon la revendication 1, **caractérisé en ce que** le conduit (200) comprend, de plus, des moyens d'analyse intégrés (205), avec leurs moyens de visualisation (206) respectifs, telles que des diodes électroluminescentes (LED), des affichages à cristaux liquides (LCD) ou n'importe quel autre élément adapté pour fournir l'information concernant les paramètres relatifs au fonctionnement du bloc fusible (101).

13. Conduit (200) selon l'une quelconque des revendications précédentes, **caractérisé en ce qu'**il comprend des moyens de fixation adaptés pour être fixés sur les moyens de fixation des conduits (200) adjacents, rendant leur mouvement solidaire.

14. Bloc fusible (101) d'un tableau de distribution d'électricité (100), **caractérisé en ce qu'**il comprend :
des éléments de surveillance auxiliaires (104) surveillant des paramètres de fonctionnement ;
au moins un câble de surveillance (102) transmettant les paramètres surveillés ;
un conduit (200) selon l'une quelconque des revendications 1 à 13, conduisant le au moins un câble de surveillance (102).

15. Système de surveillance pour surveiller un tableau de distribution d'électricité (100) comprenant une pluralité de blocs fusibles (101), **caractérisé en ce qu'**il comprend en outre :
des éléments de surveillance auxiliaires (104) surveillance des paramètres de fonctionnement ;
des moyens de traitement (300) traitant les paramètres surveillés ;
une pluralité de câbles de surveillance (102) transmettant les paramètres surveillés ;
des moyens de commande externes (400) supervisant le tableau de distribution (100) ; et
une pluralité de conduits (200) selon l'une quelconque des revendications 1 à 13, conduisant la pluralité de câbles de surveillance (102).

16. Système de surveillance selon la revendication 15, **caractérisé en ce que** les moyens de traitement (300) sont répartis entre la pluralité de blocs fusibles (101), étant intégrés à proximité des éléments de surveillance auxiliaires (104), et les câbles de surveillance (102) raccordant lesdits moyens de traitement (300) répartis avec les moyens de commande (400).
